# EUROPEAN PATENT APPLICATION

(11) **EP 1 686 771 A2**
(43) Date of publication of application: **02.08.2006**
(21) Application number: 06001214.3
(22) Date of filing: 20.01.2006
(51) Int. Cl.: H04M 1/22, G09G 3/00

(54) **Apparatus and method for displaying data using afterimage effect in mobile communication terminal**

(30) Priority: 31.01.2005 KR 2005008562
(71) Applicant: Samsung Electronics Co., Ltd., Yeongtong-gu Suwon-si, Gyeonggi-do (KR)
(72) Inventor: Kim, Hak-Yeol, Yeongtong-gu Suwon-si Gyeonggi-do (KR); Kim, Dong-Woo, Yeongtong-gu Suwon-si Gyeonggi-do (KR); Kim, Dong-Sub, Yeongtong-gu Suwon-si Gyeonggi-do (KR)
(74) Representative: Lang, Johannes

(57) **Abstract**

An apparatus and method for displaying data using an afterimage effect in a mobile communication terminal are provided where a display unit having an LCD displays data according to an input operation signal, and a control unit outputs the operation signal to the display unit so as to scale the data according to a size of the LCD provided in the display unit, divide the scaled data in a specified horizontal or vertical unit, sequentially display the divided data, and repeatedly display the data.

## Description

### BACKGROUND OF THE INVENTION

### 1. Field of the Invention

The present invention relates to an apparatus and method for displaying data in a mobile communication terminal. More particularly, the preset invention relates to an apparatus and a method for displaying data in a matrix space using an afterimage effect in a mobile communication terminal.

### 2. Description of the Related Art

After the development of a land line telephone, communication technologies have been developing in various fields, from a radiotelegraph capable of providing wireless communication over a short distance to a 900MHz wireless telephone, and to a mobile phone capable of providing mobile wireless communication.

Recently, mobile communication terminals have been developed with functions of sending a text message, transmitting various information and accessing the Internet in addition to a simple voice transfer function. In addition, the mobile communication terminals have been provided with a high resolution LCD to display various colors with high definition. Such a mobile communication terminal has become a modern necessity. In particular, a new generation mobile communication terminal can be provided with a night lamp, a touch call using minute current flow, emoticon and avatar display, and so forth, which can express individuality of users and emphasize self-expression. Accessories in association with the mobile communication terminal such as a display device for showing character string using an afterimage effect have been provided on the basis of the above-described features.

Most of these accessories provide auxiliary functions in association with the mobile communication terminal, or are related to functions of other existing accessories. Creativity and practical application which bring taste and personality of a user into play and provide an additional entertainment effect are somewhat degraded. Also, since the accessories are provided as external devices, a user must carry these accessories separately.

### SUMMARY OF THE INVENTION

Accordingly, the present invention has been designed to address the above and other problems occurring in the prior art, and provides, for example, an apparatus for displaying data in a matrix space in a horizontal or vertical direction using an afterimage effect in a mobile communication terminal having an LCD.

In one aspect of the present invention, there is provided an apparatus for displaying data using an afterimage effect in a mobile communication terminal, comprising a display unit having an LCD for displaying the data according to an input operation signal, and a control unit for outputting the operation signal to the display unit having the LCD so as to scale the data according to the size of the LCD provided in the display unit. The scaled data may be divided in a specified horizontal or vertical unit. The divided data may be sequentially displayed, and the data may be repeatedly displayed.

Another object of the present invention is to provide a method for displaying data using an afterimage effect in a mobile communication terminal having an LCD, which can maintain the afterimage effect for a long time by compensating for, and outputting the data in a specified position according to, a variation value if the moving position is varied when the data is being displayed.

In another aspect of the present invention, there is provided a method for displaying data using an afterimage effect in a mobile communication terminal, comprising the steps of, when an afterimage displaying function is performed, scaling the data according to the size of an LCD, dividing the scaled data in a specified horizontal or vertical unit, sequentially displaying the divided data for a predetermined time, and repeatedly displaying the data. If a moving position is varied while the data is repeatedly displayed, a variation value of the moving position is compared with a predetermined critical variation value of the moving position. If the variation value of the moving position is less than a predetermined critical variation value of the moving position, the sequentially displayed data is compensated for in accordance with varied position information, and the data is displayed.

### BRIEF DESCRIPTION OF THE DRAWINGS

The above and other objects, features and advantages of the present invention will be more apparent from the following detailed description of the exemplary embodiments of the present invention taken in conjunction with the accompanying drawings, in which like reference symbols indicate the same or similar components, wherein:
FIG. 1 is a block diagram illustrating the construction of a mobile communication terminal according to an exemplary embodiment of the present invention;
FIG. 2 is a flowchart illustrating a process of setting and displaying data using an afterimage effect according to an exemplary embodiment of the present invention;
FIGs. 3A and 3B are flowcharts illustrating a process of setting an afterimage-display environment to be applied to FIG. 2;
FIGs. 4A through 4C are flowcharts illustrating a process of setting afterimage-display data to be applied to FIG. 2;
FIG. 5 is a flowchart illustrating a process of performing an afterimage displaying function to be applied to FIG. 2;
FIG. 6 is a view illustrating an exemplary implementation of the present invention where a mobile communication terminal displays data in an empty space using an afterimage effect according to an embodiment of the present invention; and
FIGs. 7A through 7C are views illustrating an example of sequentially displaying data divided according to an exemplary embodiment of the present invention.

### DETAILED DESCRIPTION OF EXEMPLARY EMBODIMENTS

Exemplary embodiments of the present invention will be described in detail hereinafter with reference to the accompanying drawings. In the following description of the exemplary embodiments of the present invention, only parts necessary for understanding the operation of the exemplary embodiments of the present invention will be explained, but a detailed description of known functions and configurations incorporated herein will be omitted for conciseness.

The term "afterimage effect" refers to a phenomenon in which the retina of a human eye retains an image for about 1/10 second even though an object perceived by sight organs of the human disappears instantly. Hence, a human sees the illusion of object for a split second even through the object disappears. For example, by displaying a series of intermittent images as a moving film on which the discontinuous images are formed at high speed, human eye recognizes this as a continuous moving image. Also, if a human looks at a white surface after he/she sees a black spot on a white background, he/she may still perceive the black spot on the white surface, which is the afterimage.

The term afterimage-display data information means information comprising color information of data to be displayed as an afterimage, background color information, data information, and data position information for showing display provided by the afterimage effect in a position set in a matrix space. The term afterimage-display environment information means information comprising brightness information of light outputted from an LCD display, unit information for dividing data to be output in predetermined unit, and motion sample information for outputting the divided data in a specified pattern. Although the afterimage-display data information and the afterimage-display environment information are separately set using different menus in this exemplary embodiment of the present invention, it would be understood by those skilled in the art that the afterimage-display data information and the afterimage-display environment information may be set in, for example, a single integrated menu.

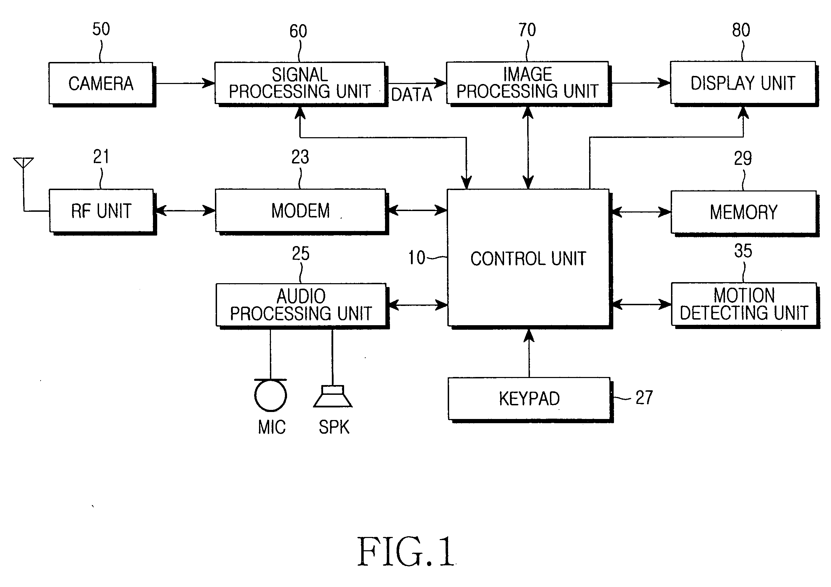

FIG. 1 is a block diagram illustrating the construction of a mobile communication terminal according to an exemplary embodiment of the present invention. Referring to FIG. 1, an RF unit 21 carries out communication of the mobile communication terminal. The RF unit 21 has an RF receiver for transforming and amplifying a frequency of transmitted signal, and an RF receiver for amplifying a received signal and transforming a frequency of the received signal.

A modem 23 has a transmitter for coding and modulating the transmitted signal, and a receiver for demodulating and decoding the received signal.

An audio processing unit 25 has a codec, and the codec has a data codec for processing packet data, and an audio codec for processing an audio signal such as speech. The audio processing unit 25 converts a digital audio signal received by the modem 23 into an analog signal through the audio codec to reproduce the signal, or converts an analog audio signal transmitted from a microphone into a digital audio signal through the audio codec to the digital audio signal to the modem 23. The codec may be separately provided or included in a control unit 10.

A keypad 27 has keys for inputting numeral and character information, and function keys for setting various functions. The keypad 27 may have an afterimage menu selection key, an afterimage-display data setting menu key, an afterimage-display environment setting menu key, and a store key, according to exemplary implementations of the present invention.

A memory 29 may have a program memory and a data memory. The program memory stores a program for controlling general operation of the mobile communication terminal. The data memory temporarily stores data produced during the program execution. The program memory stores a program for controlling operation required for performing the afterimage displaying function, a program for repeatedly outputting data, and a program for compensating for and displaying data in accordance with a variation value of moving position, when the moving position is varied when performing the afterimage displaying function, according to exemplary implementations of the present invention.

Also, the data memory stores the afterimage-display data information comprising data information outputted from the display, color infonnation and background color information of the output data, and data position information for showing the display provided by the afterimage effect in a position set in a matrix space, and the afterimage-display environment information comprising brightness information of light outputted from the display, unit information for dividing data to be output in predetermined unit and displaying the data on the display, and motion sample information for outputting the divided data in a specified pattern, according to exemplary implementations of the present invention.

The motion detecting unit 35 may comprise a 3-axis accelerometer for detecting spatial motion, and a 3-axis geomagnetic sensor for detecting orientation. The motion detecting unit 35 outputs a detection signal indicative of motion of the mobile communication terminal in up/down/left/right directions (four directions) and front/rear directions (two directions), if the mobile communication terminal moves. At that time, the motion detecting unit 35 may comprise any sensor outputting a detection signal corresponding to the motion of the mobile communication terminal.

The control unit 10 controls the general operation of the mobile communication terminal, and may include the modem 23 and the codec. Also, the control unit 10 scales the data in accordance with a size of the display, when the afterimage displaying function is performed, and divides the scaled data in horizontal or vertical unit in accordance with the motion of the mobile communication terminal, according to exemplary implementations of the present invention.

In addition, the control unit 10 controls the memory 29 and the display unit 80 to sequentially display the divided data and repeatedly display the data in accordance with a predetermined time. Also, if the moving position is varied while the data is repeatedly displayed, the control unit 10 compares the variation value of the moving position with a predetermined critical variation value of moving position. If the variation value of the moving position is less than the predetermined critical variation value of the moving position, the control unit controls the display to compensate for the data to display the afterimage in accordance with the varied position information and then displaying the data.

A camera 50 takes a picture of image data, and has a camera sensor for converting the photographed optical signal into an electrical signal. In an exemplary implementation of the present invention, the camera sensor is a CCD sensor.

A signal processing unit 60 converts an image signal outputted from the camera 50 into an image signal. The signal processing unit 60 may comprise a digital signal processor (DSP).

An image processing unit 70 generates a screen data to display the image signal outputted from the signal processing unit 60. The image processing unit 70 scales the data outputted under the control of the control unit, outputs the data according to a standard of a display unit 80, and compresses and expands the image data.

Also, the display unit 80 displays the data based on the afterimage display data information and the afterimage display environment information stored in the memory 29, according to an embodiment of the present invention. The display unit 80 utilizes an LCD, and, in this case, the display unit 80 may include an LCD control unit, a memory for storing the image data, and an LCD display device. In the case in which the LCD is embodied in the form of a touch screen, the keypad 27 and the LCD may be an input unit. The display unit 80 includes an image data display from which an image data is output.

Considering operation of the mobile communication terminal with reference to FIG. 1, in a calling mode, when a user dials using the keypad 27 and sets the calling mode, the control unit 10 detects the calling, processes dial information received through the modem 23, and converts this into an RF signal through the RF unit 21 to output the RF signal. When the other subscriber generates a response signal, the user detects the response signal through the RF unit 21 and the modem 23. Then, a voice calling path is set through the audio processing unit 25, so that the user performs a communication function. Also, in a receiving mode, the control unit 10 detects the receiving mode through the modem 23, and generates a calling signal through the audio processing unit 25. Then, if the user answers, the control unit 10 detects the answering. Also, a voice calling path is set through the audio processing unit 25, so that the user performs the communication function. Although the calling mode and the receiving mode are explained by way of an example of voice communication, data communication to communicate packet data and image data is also applicable. Also, in the case of a holding mode, or when performing text communication, the control unit 10 displays text data, which is processed through the modem 23, on the display unit 80.

In a process of displaying the data using the afterimage effect in the mobile communication terminal, when control unit 10 detects that the user is performing an afterimage displaying function using, for example, the keypad 27, the control unit 10 controls the memory 29 and the image processing unit70, scales the data in accordance with a size of the LCD provided in the display unit 80, and divides the scaled data in a specified horizontal or vertical unit. The control unit 10 controls the memory 29 and the display unit 80 to sequentially display the divided data and repeatedly display the data in accordance with a predetermined time.

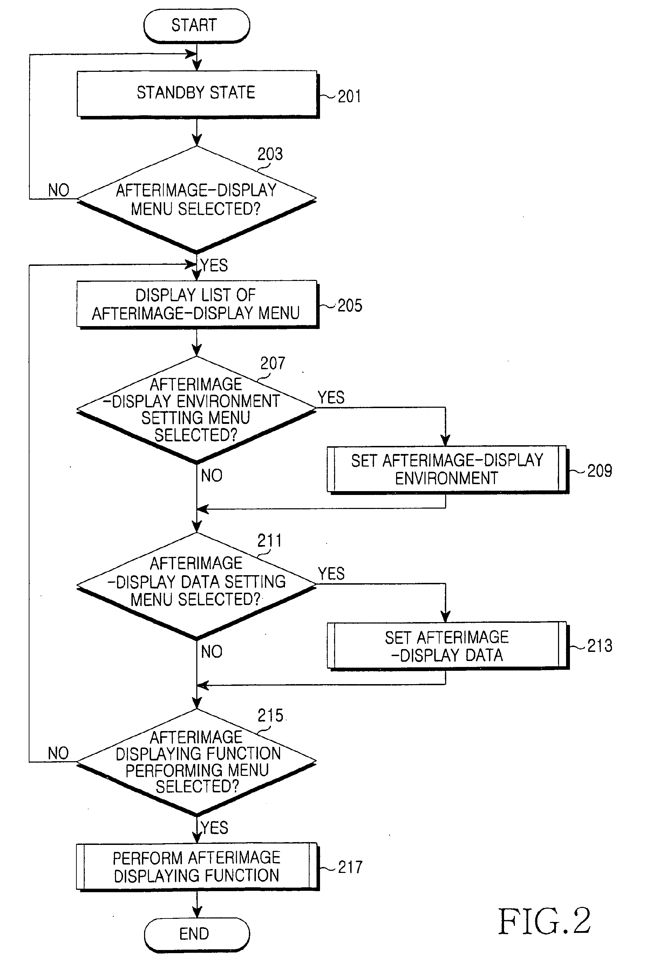

FIG. 2 is a flowchart illustrating a process of setting and displaying data using the afterimage effect according to an embodiment of the present invention. The process of displaying the data using the afterimage effect according to an embodiment of the present invention and the process of setting the display data applied to the data to be displayed and the afterimage display environment are explained with reference to FIG. 2 as follows. When the user selects an afterimage-display menu using the keypad 27 in step 201 of standby state, the control unit 10 detects this selection in step 203, and proceeds to step 205 to control the memory 29 and the display unit 80 to display a list of afterimage-display menu as illustrated, for example, in Table 1. A key for performing the afterimage displaying function mode may be positioned on a navigation key of the keypad 27, or may be displayed and selected as a menu by using a menu key.

**Table 1**

| | Afterimage-Display Menu List |
|---|---|
| 1 | Afterimage-Display Environment Setting |
| 2 | Afterimage-Display Data Setting |
| 3 | Afterimage-Display Function Performing |

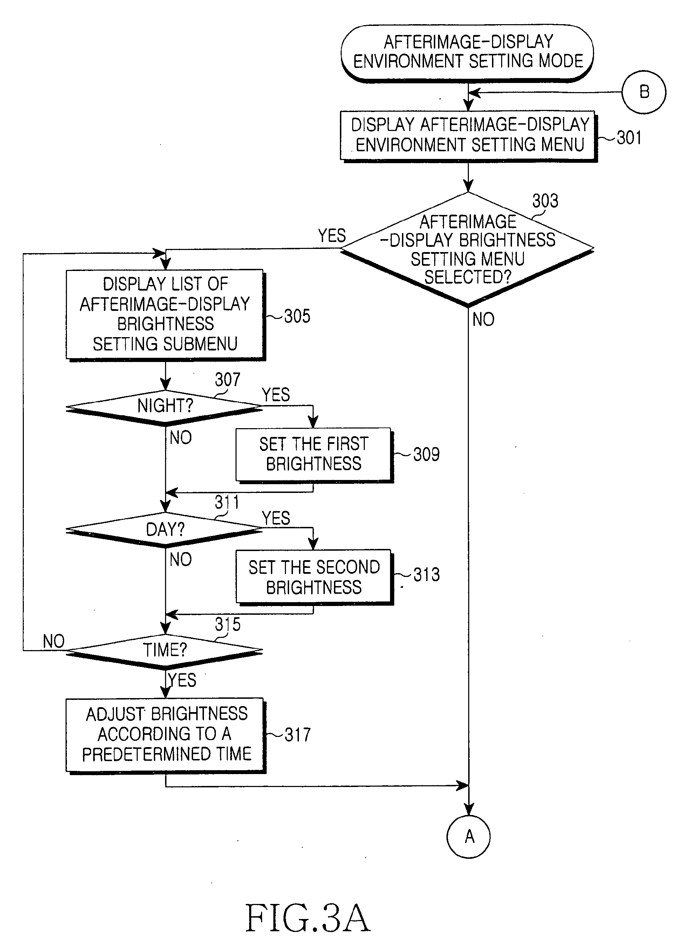

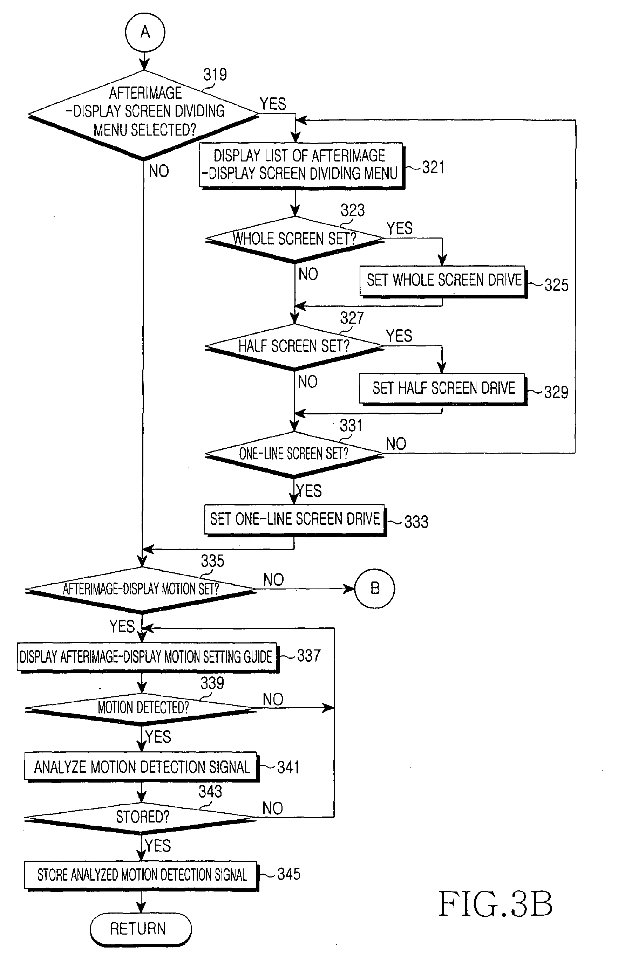

First, if a user of a mobile communication terminal selects a first menu 'afterimage-display environment setting' from the list of afterimage-display menu using the keypad 27, the control unit 10 detects this selection in step 207, and proceeds to step 209 to execute the afterimage-display environment information setting mode. In the afterimage-display environment information setting mode, the brightness information of light outputted from the display unit 80 having the LCD, the unit information for dividing the data to display an afterimage in predetermined unit and displaying the data on the display unit 80, and the motion sample information for outputting the divided data in a specified pattern can be set according to selection of the user. An exemplary process for setting the afterimage-display environment information will be described in detail hereinafter with reference to FIGs. 3A and 3B.

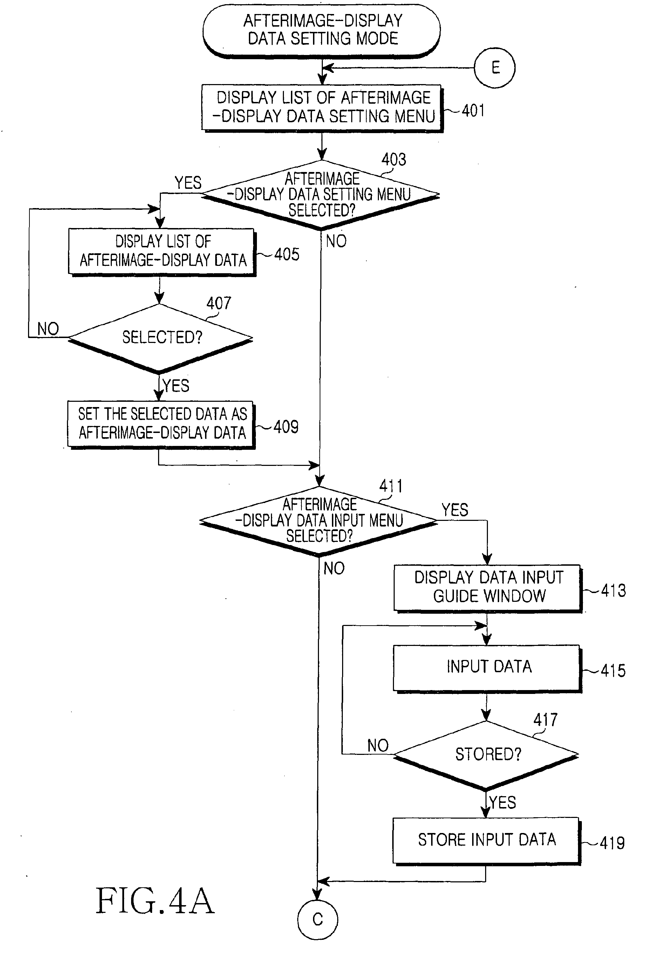

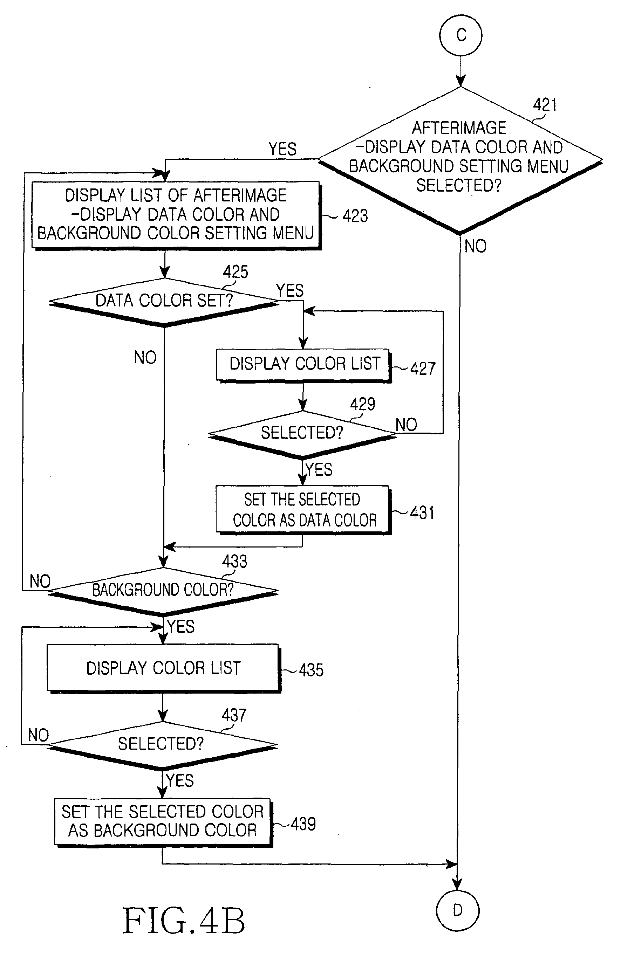

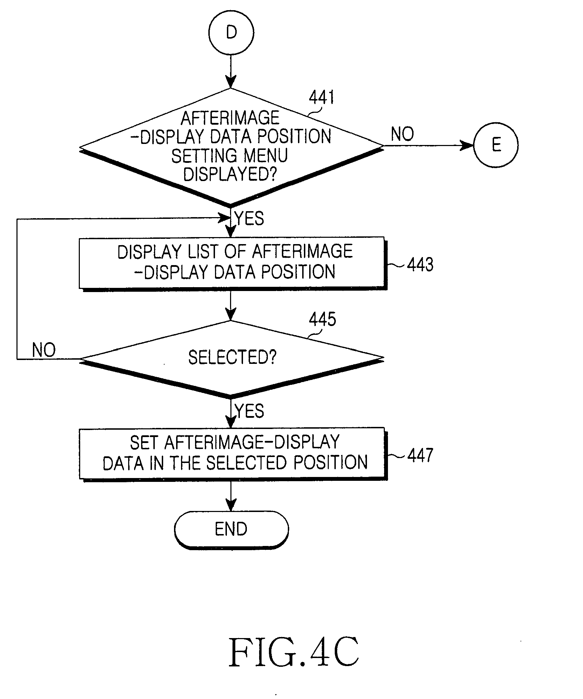

Second, if the user of a mobile communication terminal selects a second menu 'afterimage-display data setting' from the list of afterimage-display menu using the keypad 27, the control unit 10 detects this selection in step 211, and proceeds to step 213 to execute the afterimage-display data information setting mode. In the afterimage-display data information setting mode, the data information outputted from the display unit 80 having the LCD, the color information and background color information of the output data, and the data position information for showing the display provided by the afterimage effect in a position set in a matrix space can be set according to selection of the user. The process of setting the afterimage-display data information will be described in detail hereinafter with reference to FIGs. 4A through 4C.

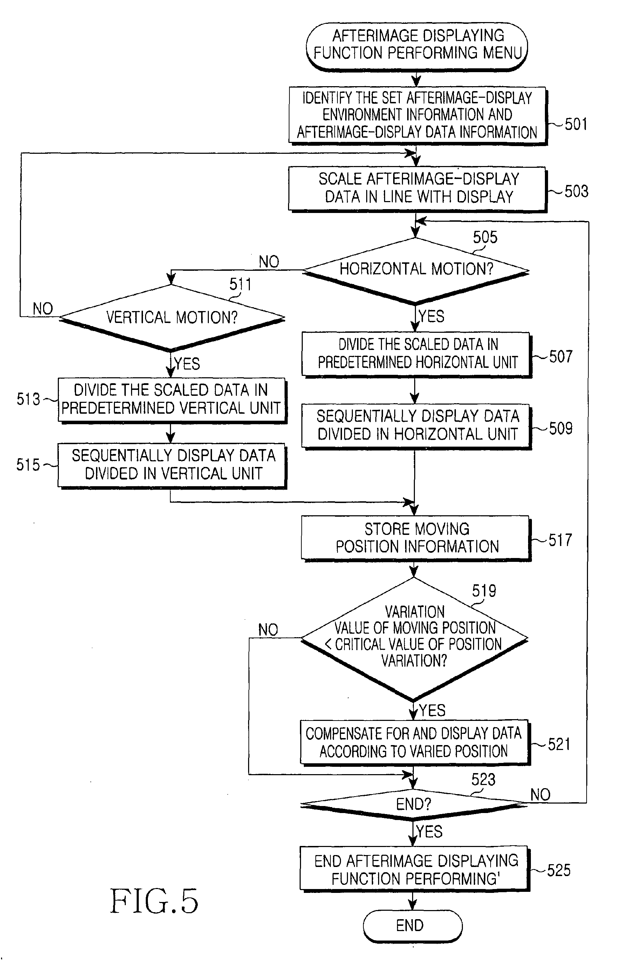

Finally, if the user of a mobile communication terminal selects a third menu 'afterimage-display function performing' from the list of afterimage-display menu using the keypad 27, the control unit 10 detects this selection in step 215, and proceeds to step 217 to execute the afterimage-display function performing mode. In the afterimage-display mode, the set afterimage-display data information and the afterimage-display data information and the set afterimage-display environment information are applied to the data to display the afterimage. The control unit 10 displays repeatedly the information on the display unit 80. If the moving position is varied during the repeated display of the data, the control unit 10 compensates for the data in accordance with the variation value of the moving position to display the compensated data. The process of performing the afterimage displaying function will be described in detail hereinafter with reference to FIG. 5.

FIGs. 3A and 3B are flowcharts illustrating the process of setting the afterimage-display environment to be applied to FIG. 2. An exemplary process of setting the afterimage-display environment is explained with reference to FIGs. 3A and 3B as follows. If a first menu 'afterimage-display environment setting' is selected from the list of afterimage-display menu as shown in Table 1, and the afterimage-display environment mode is executed, the control unit 10 controls the memory 29 and the display unit 80 in step 301 to display a list of afterimage-display environment setting menu as illustrated, for example, in Table 2.

**Table 2**

| | Afterimage-Display Environment Setting Menu List |
|---|---|
| 1 | Afterimage-Display Brightness Setting |
| 2 | Afterimage-Display Screen Dividing Setting |
| 3 | Afterimage-Display Motion Setting |

First, if the user of a mobile communication terminal selects a first menu 'afterimage-display brightness setting' from the list of afterimage-display environment setting menu using the keypad 27, the control unit 10 detects this selection in step 303, and proceeds to step 305 to control the memory 29 and the display unit 80 for displaying a list of afterimage-display brightness setting submenu as illustrated, for example, in Table 3.

**Table 3**

| | Afterimage-Display Brightness Setting Submenu List |
|---|---|
| 1 | Night Brightness Setting |
| 2 | Day Brightness Setting |
| 3 | Brightness Setting According to Predetermined Time |

If the user of a mobile communication terminal selects a first menu 'night brightness setting' from the list of afterimage-display brightness setting submenu using the keypad 27, the control unit 10 detects this selection in step 307, and proceeds to step 309 to control the memory 29 for setting and storing brightness of light outputted from the display unit 80 when performing the afterimage displaying function as a first brightness which is normal brightness.

However, if the user of a mobile communication terminal selects a second menu 'day brightness setting' from the list of afterimage-display brightness setting submenu using the keypad 27, the control unit 10 detects this selection in step 311, and proceeds to step 313 to control the memory 29 for setting and storing brightness of light outputted from the display unit 80 when performing the afterimage displaying function as a second high brightness.

Also, if the user of a mobile communication terminal selects a third menu 'brightness setting according to predetermined time' from the list of afterimage-display brightness setting submenu using the keypad 27, the control unit 10 detects this selection in step 315, and proceeds to step 317 to control the memory 29 for setting and storing brightness of light outputted from the display unit 80 when performing the afterimage displaying function according to a predetermined time. For example, more electric current flows to be brighter during the day, while less electric current flows to be dimmer at night. Brightness of the light outputted from the display unit can be adjusted by the amount of electric current.

Second, if the user of a mobile communication terminal selects a second menu 'afterimage-display screen divide' from the list of afterimage-display environment setting menu using the keypad 27, the control unit 10 detects this selection in step 319, and proceeds to step 321 to control the memory 29 and the display unit 80 for displaying a list of afterimage-display screen divide submenu as illustrated, for example, in Table 4.

**Table 4**

| | Afterimage-Display Screen Divide Submenu List |
|---|---|
| 1 | Whole Screen Setting |
| 2 | Half Screen Setting |
| 3 | One-Line Screen Setting |

If the user of a mobile communication terminal selects a first menu 'whole screen setting' from the list of afterimage-display screen divide submenu using the keypad 27, the control unit 10 detects this selection in step 323, and proceeds to step 325 to control the memory 29 for setting and storing the data to display the afterimage through the whole of the display unit 80 when performing the afterimage displaying function.

However, if the user of a mobile communication terminal selects a second menu 'half screen setting' from the list of afterimage-display screen divide submenu using the keypad 27, the control unit 10 detects selection in step 327, and proceeds to step 329 to control the memory 29 for setting and storing the data to display the afterimage through the half of the display unit 80 when performing the afterimage displaying function.

Also, if the user of a mobile communication terminal selects a third menu 'one-line screen setting' from the list of afterimage-display screen divide submenu using the keypad 27, the control unit 10 detects this selection in step 331, and proceeds to step 333 to control the memory 29 for setting and storing the data to display the afterimage through only one line of the display unit 80 when performing the afterimage displaying function. The reason why the display unit 80 is divided to display the afterimage is that as the data is displayed in a wide area when performing the afterimage displaying function, a clearer and brighter afterimage can be displayed. Hence, in the case in which the surrounding environment is bright and battery lifetime is long, a clear and bright afterimage can be displayed by using the whole display unit 80. Otherwise, in the case in which the surrounding environment is dark and battery lifetime is short, the afterimage can be displayed by using only one line of the display unit 80.

Finally, if the user of a mobile communication terminal selects the third menu 'afterimage-display motion setting' from the list of afterimage-display environment setting using the keypad 27, the control unit 10 detects this selection in step 335, and proceeds to step 337 to control the memory 29 and the display unit 80 for displaying a message of guiding the afterimage-display motion setting. The message of guiding the afterimage-display motion setting may be displayed in various patterns such as text, image, or sound. If the user of a mobile communication terminal moves the mobile communication terminal in the same way (up/down directions and left/right directions), for example when performing the afterimage displaying function in accordance with the message of guiding the afterimage-display motion setting to be displayed, the motion detecting unit 35 detects the motion of the mobile communication terminal and output a motion detection signal to the control unit 10. The control unit 10 detects the motion detection signal in step 339, and proceeds to step 341 to analyze the input motion detection signal. And, if the user of the mobile communication terminal inputs a store key using the keypad 27, the control unit 10 detects this in step 343, and proceeds to step 345 to control the memory 29 for storing the analyzed motion detection signal. The motion detection signal comprises information on a moving range of the mobile communication terminal when performing the afterimage displaying function, which can output the data to display the afterimage in a specified pattern.

FIGs. 4A through 4C are flowcharts illustrating an exemplary process of setting afterimage-display data to be applied to FIG. 2. The process of setting the afterimage-display environment is explained with reference to FIGs. 4A through 4C as follows. If a second menu 'afterimage-display data setting' is selected from the list of afterimage-display menu as shown in Table 1, and the afterimage-display data setting mode is executed, the control unit 10 controls the memory 29 and the display unit 80 in step 401 to display a list of afterimage-display data setting menu as illustrated, for example, in Table 5.

**Table 5**

| | Afterimage-Display Data Setting Menu List |
|---|---|
| 1 | Afterimage-Display Setting |
| 2 | Afterimage-Display Data Input |
| 3 | Afterimage-Display Data Color and Background Color Setting |
| 4 | Afterimage-Display Data Position Setting |

If the user of a mobile communication terminal selects a first menu 'afterimage-display data setting' from the list of the afterimage-display data setting menu using the keypad 27, the control unit 10 detects this selection in step 403, and proceeds to step 405 to control the memory 29 and the display unit 80 for displaying a list of afterimage-display data menu. If the user of a mobile communication terminal selects any one of the afterimage-display data menu by using the keypad 27, the control unit 10 detects this selection in step 407, and proceeds to step 409 to control the memory 29 for setting and storing the selected data as data to be displayed when performing the afterimage displaying function.

Second, if the user of a mobile communication terminal selects a second menu 'afterimage-display data input' from the list of afterimage-display data setting menu using the keypad 27, the control unit 10 detects this selection in step 411, and proceeds to step 413 to control the memory 29 and the display unit 80 for displaying a window of guiding afterimage-display data input. And, if the user of a mobile communication terminal inputs data in the window of guiding the afterimage-display data by using the keypad 27, the control unit 10 detects this input in step 415. Then, if the user of a mobile communication terminal inputs a store key using the keypad 27, the control unit 10 detects this input in step 417, and proceeds to step 417 to control the memory 29 for storing the input data.

Third, if the user of a mobile communication terminal selects a third menu 'afterimage-display data color and background color setting' from the list of afterimage-display data setting menu using the keypad 27, the control unit 10 detects this selection in step 421, and proceeds to step 423 to control the memory 29 and the display unit 80 for displaying afterimage-display data color and background submenu as illustrated, for example, in Table 6.

**Table 6**

| | Afterimage-Display Data Color and Background Color Setting Menu List |
|---|---|
| 1 | Data Color Setting |
| 2 | Background Color Setting |

If the user of a mobile communication terminal selects a first menu 'data color setting' from the list of afterimage-display data color and background color setting menu using the keypad 27, the control unit 10 detects this selection in step 425, and proceeds to step 427 to control the memory 29 for displaying a color list. And, if the user of a mobile communication terminal selects any one color in the displayed color list by using the keypad 27, the control unit 10 detects this selection in step 429, and proceeds to step 431 to control the memory 29 for setting and storing the selected color as a data color.

However, if the user of a mobile communication terminal selects a second menu 'background color setting' from the list of afterimage-display data color and background color setting menu using the keypad 27, the control unit 10 detects this selection in step 433, and proceeds to step 435 to control the memory 29 for displaying a color list. And, if the user of a mobile communication terminal selects any one color in the displayed color list by using the keypad 27, the control unit 10 detects this selection in step 437, and proceeds to step 439 to control the memory 29 for setting and storing the selected color as a background color.

Finally, if the user of a mobile communication terminal selects a fourth menu 'afterimage-display data position setting' from the list of afterimage-display data setting menu using the keypad 27, the control unit 10 detects this selection in step 441, and proceeds to step 443 to control the memory 29 and the display unit 80 for displaying a list of afterimage-display data positions. And, if the user of a mobile communication terminal selects any one of the afterimage-display data positions by using the keypad 27, the control unit 10 detects this selection in step 445, and proceeds to step 447 to control the memory 29 for setting and storing the selected position as the afterimage-display data position. The list of afterimage-display positions consists of a left section, a middle section, and a right section. If the left section of the afterimage-display data positions is set, the afterimage-display data is displayed on a left portion of a space displayed with the afterimage, when performing the afterimage displaying function. If the middle section of the afterimage-display data positions is set, the afterimage-display data is displayed on a middle portion of a space displayed with the afterimage, when performing the afterimage displaying function. And, if the right section of the afterimage-display data positions is set, the afterimage-display data is displayed on the right portion of the space displaying with the afterimage, when performing the afterimage displaying function.

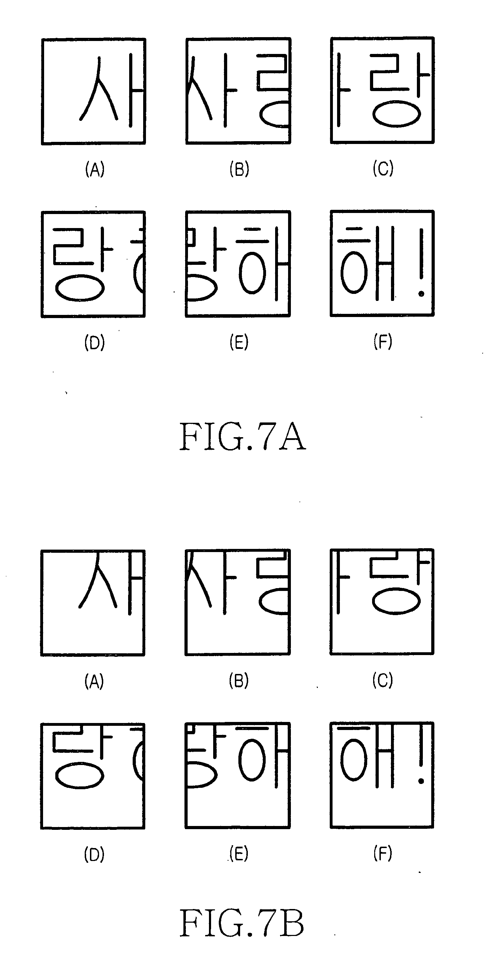

FIG. 5 is a flowchart illustrating an exemplary process of performing the afterimage displaying function to be applied to FIG. 2. FIGs. 7A through 7C are views illustrating an example of sequentially displaying the data divided according to an embodiment of the present invention. The process of performing the afterimage display function according to an exemplary embodiment of the present invention is explained with reference to FIGs. 5 and 7A through 7C as follows. If the user of a mobile communication terminal selects a third menu 'afterimage displaying function performing' from the list of afterimage-display using the keypad 27, the control unit 10 controls the memory 29 to identify the set afterimage-display environment information and the afterimage-display data information in step 501. And, the control unit 10 controls the image processing unit 70 to scale the data for displaying the afterimage according to the size of the LCD provided in the display unit 80, as shown in FIG. 7A - (A), in step 501. Explaining the scaling process in brief, the control unit receives RGB data, and a horizontal sync signal and a vertical sync signal outputted from a decoder, and scales the RGB data on the basis of sync signals. The scaling operation is as follows. First, a size of the image to be displayed is determined. Then, a horizontal sync signal and a vertical sync signal corresponding to the determined size of the image to be displayed are set. And, a scaling rate (enlarging/reducing rate) is set. Finally, 720*4096/VXSIZE corresponding to a horizontal direction is computed to be set as HLSR, while 240*2048/VYSIZE is computed to be set as VLSR.

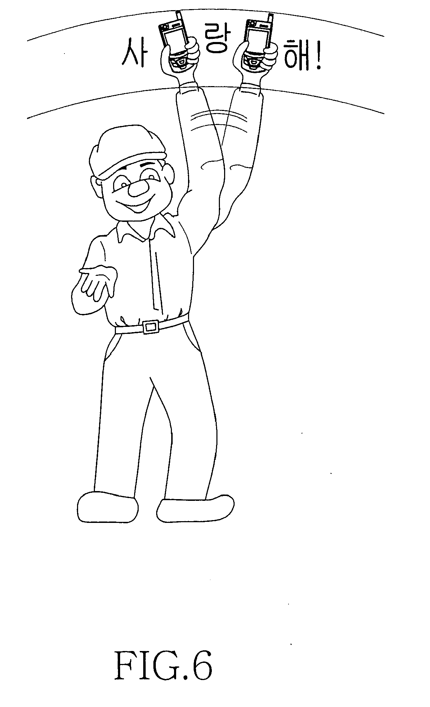

Then, if the user of a mobile communication terminal moves the mobile communication terminal in a horizontal direction as shown in FIG. 6, the motion detection unit 35 detects the motion of the mobile communication terminal and outputs the motion detection signal to the control unit 10. The control unit 10 detects the motion detection signal in step 505, and proceeds to step 507 to divide the data scaled according to the LCD provided in the display unit 80 in horizontal unit in accordance with the set afterimage-display environment information. And, the control unit 10 controls the image processing unit 70 and the display unit 80 to sequentially and repeatedly display the afterimage display data divided in horizontal unit as shown in FIG. 7A - (A) through (F) in step 509. However, if the user of a mobile communication terminal moves the mobile communication terminal in a vertical direction in a similar manner, as shown in FIG. 6 (although FIG. 6 shows a horizontal motion, a vertical motion is possible in the same way as that shown in FIG. 6.), the motion detection unit 35 detects the motion of the mobile communication terminal to output the motion detection signal to the control unit 10. The control unit 10 detects the motion detection signal in step 511, and proceeds to step 513 to divide the data scaled according to the LCD provided in the display unit 80 in vertical unit in accordance with the set afterimage-display environment information. And, the control unit 10 controls the image processing unit 70 and the display unit 80 to sequentially and repeatedly display the afterimage display data divided in vertical unit.

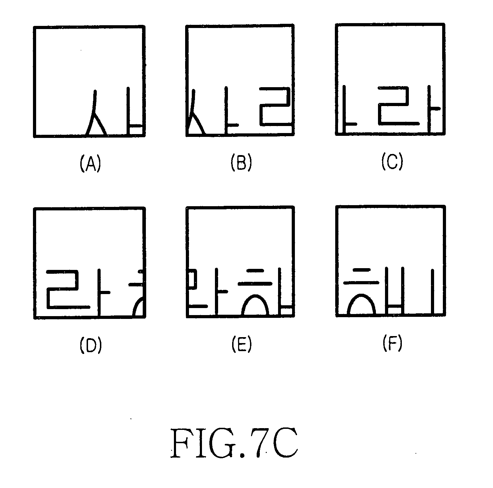

The control unit 10 controls the memory 29 to store the position information of horizontal or vertical motion in step 517. During the afterimage displaying function, the motion detecting unit 35 detects the motion of the mobile communication terminal to output the motion detection signal to the control unit 10. At this time, if the moving position is varied, the control unit 10 compares the variation value of the moving position with the predetermined critical variation value of the moving position previously stored. If the variation value of the moving position is more than the predetermined critical variation value of the moving position, the control unit detects this difference in step 519, and proceeds to step 505 or 511 to sequentially and repeatedly display the data for displaying the afterimage. However, if the variation value of the moving position is less than the predetermined critical variation value of the moving position, as detected by the control unit in step 519, the control unit proceeds to step 521 to control the image processing unit 70 and the display unit 80 for compensating for the data to display the afterimage in accordance with the varied position value and then displaying the data. If the moving position is downwardly positioned, the data is adjusted downward, as shown in FIG. 7B (A) - (F), to display the afterimage data. If the moving position is upwardly varied, the data is adjusted upwardly, as shown in FIG. 7C (A) - (F), to display the afterimage data. The afterimage-display data may be always displayed in the same position in the space where the afterimage is displayed.

If the user of a mobile communication terminal inputs an end key by using the keypad 27, the control unit 10 detects this input in step 523, and proceeds to step 525 to end the afterimage displaying function performing mode.

As described above, various exemplary implementations of the present invention provide apparatus and method for displaying data horizontally or vertically in a matrix space using the afterimage effect in a mobile communication terminal having an LCD, which can utilize the afterimage effect without using separate afterimage-display apparatus, and display the afterimage-display data by reflecting a desired color in a position desired by a user, thereby expressing various personalities of the user and improving convenience of the user.

While the present invention has been shown and described with reference to certain exemplary embodiments thereof, it will be understood by those skilled in the art that various changes in form and details may be made therein without departing from the spirit and scope of the present invention as defined by the appended claims. For example, although FIGs. 7A through 7C illustrate the data display in accordance with the horizontal motion, it would be understood by those skilled in the art that the data display may be applied to the vertical motion. Therefore, the scope of the present invention is defined by the appended claims and their equivalents.

## Claims

1. An apparatus for displaying data using an afterimage effect in a mobile communication terminal, the apparatus comprising:
a display unit comprising an LCD for displaying the data according to an operation signal; and
a control unit for outputting the operation signal to the display unit ;
wherein the data is scaled according to a size of the LCD, the scaled data is divided in at least one of a horizontal and a vertical unit, the divided data is sequentially displayed, and the data is repeatedly displayed.

2. The apparatus as claimed in claim 1, further comprising a sensor for detecting motion of the mobile communication terminal, wherein if the sensor detects a horizontal movement of the mobile communication terminal, the control unit divides the data in the specified horizontal unit, and if the sensor detects a vertical direction of the mobile communication terminal, the control unit divides the data in the specified vertical unit.

3. The apparatus as claimed in claim 1, further comprising a memory for storing at least one of:
afterimage-display data information comprising color information of the output data, data information outputted from the display unit, and data position information for showing display provided by the afterimage effect in a position set in a matrix space; and
afterimage-display environment information comprising brightness information of light outputted from the display unit, unit information for dividing the data in a predetermined unit and displaying the data on the display unit, and motion sample information for outputting the divided data in a specified pattern;
wherein the control unit controls the memory to display the data sequentially and repeatedly according to the at least one of the afterimage-display data information and the afterimage-display environment information.

4. An apparatus for displaying data using an afterimage effect in a mobile communication terminal, the apparatus comprising:
a display unit comprising an LCD for displaying the data according to an operation signal;
a sensor for detecting motion repeated in a specified pattern; and
a control unit for outputting the operation signal to the display unit;
wherein the data is scaled according to a size of the LCD, the scaled data is divided in a specified unit, the divided data is sequentially displayed, and the data is repeatedly displayed; and
wherein the control unit receives a variation value of moving position information from the sensor to compensate for and display the output data according to the varied position information.

5. The apparatus as claimed in claim 4, further comprising a memory for storing afterimage-display data information comprising data information outputted from the display unit, color information of the data to be output, and data position information for showing display provided by the afterimage effect in a position set in a matrix space;
wherein the control unit controls the memory to sequentially and repeatedly display the data in accordance with the afterimage-display data infonnation stored in the memory.

6. The apparatus as claimed in claim 4, further comprising a memory for storing afterimage-display environment information comprising brightness information of light outputted from the display unit, unit information for dividing the data in predetermined unit and displaying the data on the display, and motion sample information for outputting the divided data in a specified pattern;
wherein the control unit controls the memory to display the data sequentially and repeatedly in accordance with the afterimage-display environment information stored in the memory.

7. A method for displaying data using an afterimage effect in a mobile communication terminal comprising an LCD, the method comprising the steps of:
when performing an afterimage displaying function, scaling the data according to a size of the LCD;
dividing the scaled data in at least one of horizontal and vertical unit;
sequentially displaying the divided data according to a predetermined time; and
repeatedly displaying the data.

8. The method as claimed in claim 7, wherein the step of dividing the scaled data comprises the steps of:
if a horizontal direction of the mobile communication terminal is detected, dividing the data in a specified horizontal unit; and
if a vertical direction of the mobile communication terminal is detected, dividing the data in a specified vertical unit.

9. The method as claimed in claim 7, wherein the data is displayed in accordance with afterimage-display data information comprising data information outputted from the display, color information of the data to be outputted, and data position information for showing display provided by the afterimage effect in a position set in a matrix space.

10. The method as claimed in claim 7, wherein the data is displayed in accordance with afterimage-display environment information comprising brightness information of light outputted from the LCD, unit information for dividing the data in predetermined unit and displaying the data on the LCD, and motion sample information for outputting the divided data in a specified pattern.

11. A method for displaying data using an afterimage effect in a mobile communication terminal, the method comprising the steps of:
when performing an afterimage displaying function, scaling the data according to a size of an LCD;
dividing the scaled data in at least one of horizontal and vertical unit;
displaying the divided data sequentially according to a predetermined time;
displaying the data repeatedly;
if a moving position is varied while the data is repeatedly displayed, comparing a variation value of the moving position with a critical variation value of a moving position; and
if the variation value of the moving position is less than the critical variation value of the moving position, compensating for the sequentially displayed data in accordance with varied position information, and displaying the data.

12. The method as claimed in claim 11, further comprising the step of newly displaying the data without compensating for the sequentially displayed data if the variation value of the moving position is larger than the critical variation value of the moving position.
